Europäisches Patentamt

European Patent Office

Office européen des brevets

(11) Publication number: 0 326 231
A1

## EUROPEAN PATENT APPLICATION

(21) Application number: 89200559.6

(22) Date of filing: 12.08.86

(51) Int. Cl.⁴: B01D 19/00 , B01D 45/12 , G01F 1/74

(30) Priority: 14.08.85 GB 8520363

(43) Date of publication of application:
02.08.89 Bulletin 89/31

(60) Publication number of the earlier application in accordance with Art.76 EPC: 0 213 838

(84) Designated Contracting States:
AT BE CH DE FR IT LI LU NL SE

(71) Applicant: Northedge, Ronald
Old Signal Point La Moye
St. Brelades Jersey Channel Islands(GB)

(72) Inventor: Northedge, Ronald
Old Signal Point La Moye
St. Brelades Jersey Channel Islands(GB)

(74) Representative: Foster, David Martyn et al
MATHISEN MACARA & CO. The Coach
House 6-8 Swakeleys Road
Ickenham Uxbridge UB10 8BZ(GB)

(54) Fluid separator.

(57) A continuous separator, for separating liquid from gas, comprises a cylindrical chamber (16) into which the liquid/gas mixture enters at 12 and is directed tangentially around the cylindrical interior wall of the chamber (16). Two conical mesh members (18,20) are situated inside the chamber. The gas in the mixture is partially separated out as the mixture swirls around the wall of the chamber. Any remaining gas-containing droplets of fluid are caught on the meshes of one or other of the two conical members (18,20), and the gas escapes from such droplets. The liquid component therefore falls through to an outlet (24) and the gas rises to an outlet (22).

FIG.3.

EP 0 326 231 A1

# FLUID SEPARATOR

The present invention relates to flow meters and, more particularly, to flow meters for measuring the masses or volumes of three phases flowing along a single pipe. Such a flow meter is referred to as a 3-phase mass flow meter.

An oil well produces a mixture of oil, water and gas in normal production. In order to assess the productivity of an oil well it is necessary to know how much of these three phases: oil, water and gas, is being produced. All three phases are to be found flowing along a single pipeline from the well. The phases may be mixed or be stratified in the pipeline depending on the distance of the sampling point from the well head. The phases may also be travelling at different velocities within the pipeline.

The conventional way of measuring the volume rate of flow or, equivalently where the densities are known, the mass rate of flow of the three phases produced by an oil well is to divert the output from the well into a separator for a test period. Gravity type or centrifugal separators are typically employed. A typical gravity type separator needs to be of considerable height, of the order of, say, 10 metres. Centrifugal separators are also of large dimensions.

The outputs of the separator are taken at different points. In a gravity type separator gas is separated out and lead away from the highest outlet, the separated water is fed out from the lowest outlet, and the oil from an intermediate outlet. Each of the outlets is connected to a respective mass flow meter which measures the amount of oil, water or gas respectively.

In a centrifugal separator the input mixture is fed to a centrifuge and the various phases are separated and fed out along outlets at different radial positions. Again it is necessary to provide a separate mass flow meter on each outlet.

Such systems have considerable disadvantages. Firstly, it is necessary to considerably drop the production pressure of, for example, 5000 psi (34.5 kN/m²) before feeding the mixture to the separator. This is significant because, after separation, the oil is re-injected into the oil well output and this needs to take place at as high a pressure as possible. Secondly, it takes a considerable test period to get an accurate estimate of the relative amounts of oil, water and gas being produced by the oil well. This period needs to be at least 24 hours and in certain circumstances a test period of several days may be required. Since such testing has to be repeated at regular intervals in order to ensure that the well is not producing excessive quantities of water or gas, such extended test periods represent a considerable inconvenience and reduction in the productivity of the oil well.

US-A-4 429 581 describes a system for measuring the rate of flow of the three phases produced by an oil well which is intended to overcome some of the problems described above in relation to the conventional system by using a sampling technique. In this system the output of the oil well is diverted first to a mass flow measurement unit and, thereafter, a sample of the flow is directed to a test separator. After the sample has been taken the remainder of the flow is directed to the well output. Because only a sample of the production is taken the separator can be reduced in size. The separated liquid portion is connected to the input of a net oil computer which monitors the liquid flow rate and determines the percentage of oil and water in the liquid portion. The separated gas is connected to a flare and the separated liquid is passed to a liquid dump after passage through the oil computer. A density and temperature probe is also connected into the main flow pipeline. Outputs from the mass flow measuring unit, the density and temperature probe and the net oil computer are processed to derive the flow rates of the individual phases contained in the sample which was withdrawn.

This system has the disadvantage that it requires a complex system of valves to ensure that the mass flow measurement and direction of the flow to the test separator are carried out in the correct sequence. It also has the disadvantage that it is only capable of providing data on the particular sample taken. A further disadvantage is that the sample taken is wasted and cannot be returned to the production fluid. Therefore, if the system is to produce accurate information, samples must be taken frequently and this will lead to a considerable loss of production fluid.

US-A-4 272 982 and US-A-4 282 760 also describe flow meters for mixed liquid and gas. Both these flow meters incorporate centrifugal separators connected in the main fluid pipeline. It is not considered to be practicable to use such a centrifugal separator in the main production outlet from an oil well since it would require a considerable reduction in the output pressure. Therefore, such flowmeters could only be used by diverting the output from the well through them at reduced pressure. The present invention is directed towards solving the technical problem of providing a more efficient system of monitoring the respective flow rates of a mixture of several fluid components such as a mixture of oil, water and gas being produced by an oil well.

The invention accordingly provides a flow meter comprising a pipeline for carrying a mixture of up to three distinct fluid components, a flow meter associated with said pipeline for producing a first signal representing the flow rate of the mixture, means for producing a second signal representing the density of the mixture in the pipeline means for withdrawing a sample of the fluid from the pipeline and feeding it to a separator, means for producing a third signal representing a parameter of the non-gaseous components of the mixture, and processing means for receiving said first, second and third signals and processing them to produce outputs representing the flow rate of each fluid component passed through said pipeline characterised in that the first signal represents the volume flow rate of the mixture, in that the withdrawing means continuously withdraws a fraction of the fluid from the pipeline, in that the third signal represents the combined density of the non-gaseous components of the mixture, and in that the apparatus further comprises means for returning at least the separated non-gaseous components of the mixture to the pipeline.

Such a 3-phase mass flow meter is capable of providing continuous monitoring of the relative masses of gas, oil and water components of a fluid output from an oil well by withdrawing only a fraction of the mixture for separation of the gas only. For this purpose a very much smaller separator, having a height of typically 10cm, can be used instead of the large gravity separators previously employed.

In one embodiment the volume flow meter comprises a velocity meter, a pressure sensor and a temperature sensor, the outputs of which are fed to the processing means for producing said first signal.

Preferably the means for producing signals representing density comprise nucleonic density meters. Alternatively a capacitative density meter may be employed. In a further embodiment density is measured by a differential pressure meter in conjunction with the velocity meter.

In order to provide efficient separation of the gas from the remaining components, a preferred embodiment of the invention uses a novel separator comprising a vertically disposed cylindrical chamber having a fluid inlet adjacent the top of the chamber, said fluid inlet being adapted to direct the incoming fluid tangentially around the cylindrical interior wall of the chamber, an open-ended conical mesh member disposed with its base below said inlet, a gas outlet disposed above said inlet and above a top end of said mesh member, and an outlet below said mesh member for non-gaseous components of the input fluid.

Preferably two coaxial mesh members are provided, the lower member having a finer mesh. The meshes are sufficiently coarse to allow some solid particles in the inlet fluid to pass through them without blocking subsequent flow. The members are also preferably spaced from the chamber wall to allow larger particles to pass. Thus it is possible for all solid matter to flow through the separator.

The provision of the mesh members enables gas-containing liquid to be retained on the surface until the gas has escaped from the liquid. The use of a finer mesh member below the first mesh member allows gas actually in solution to be removed.

The tangential input to the separator also ensures that maximum separation of gas is produced as the fluid is swirled round the walls of the separator chamber.

A separator as defined above can readily separate the gas component from an input fluid in a relatively short period of time.

When such a separator is used in the flow meter of the invention a density meter is disposed below the mesh member(s) in order to produce said third signal representing the density of the remaining components of the fluid after the gas has been separated.

Two embodiments of a 3-phase mass flow meter in accordance with the invention and a gas separator which may be used in such flow meters will now be described, by way of example only, with reference to the accompanying diagrammatic drawings, in which:

Figure 1 is a diagrammatic representation of the first flow meter;

Figure 2 is a diagrammatic representation of the second flow meter; and

Figure 3 is a partially cut-away view of a gas separator for use in the flow meter of Figure 1 or Figure 2.

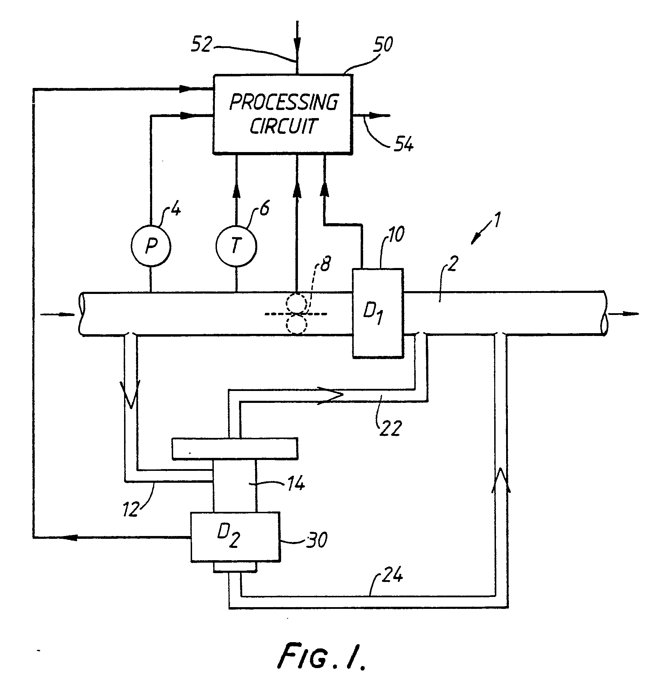

The flow meter 1 illustrated in Figure 1 comprises a pipeline 2 which may be connected in a bypass arrangement to the output of one or more oil wells to enable the flow meter to be selectively connected to the output of any one of several oil wells to monitor the relative outputs of gas, oil and water in the output of each oil well. It will be appreciated that the described 3-phase volume or mass flow meter may have other applications where it is desired to measure the relative amounts of different fluid components in a combined output. However, for the purposes of simplicity, the present invention will be described in relation to the use of the flow meter for monitoring the gas, oil and water output of an oil well.

In the pipeline 2 are connected a pressure sensor 4, a temperature sensor 6, a velocity meter 8, and a density meter 10. The outputs of all these meters, 4, 6, 8, 10 are fed to a processing circuit 50 for example

3

a microcomputer. The processing circuit derives a signal representative of the total volume flow from the outputs from the pressure, temperature and velocity meters. The processing circuit may use any conventional method to derive the total volume flow from the input signals. Various such processing methods are known which take account of Boyle's law together with the effects of supercompressability which causes the relationship between pressure temperature and volume to deviate from the conventional Boyle's law.

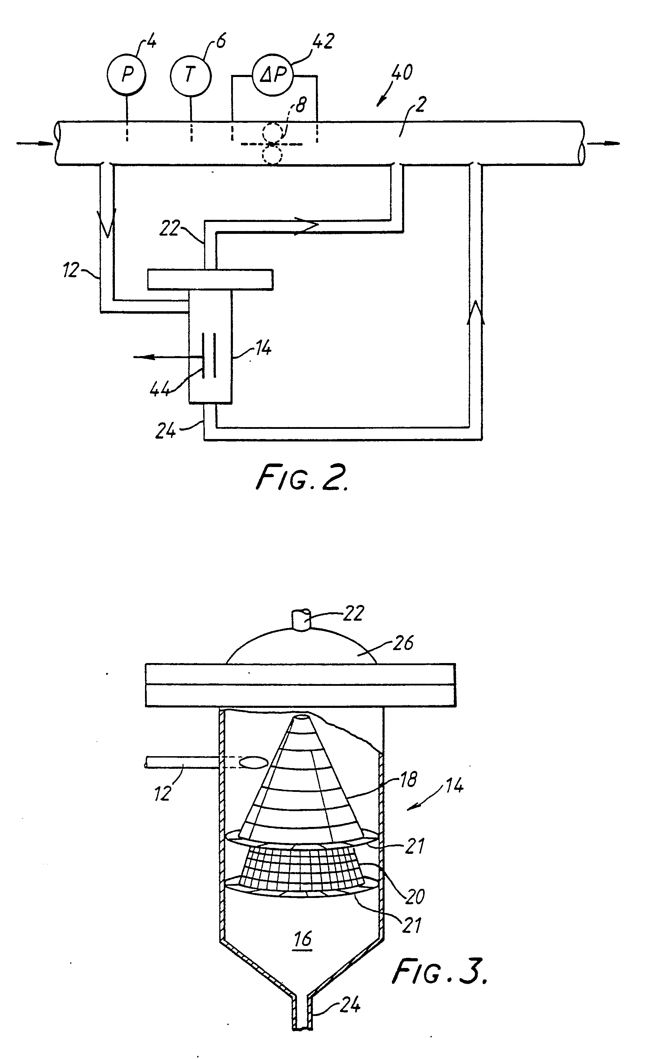

A proportion of the stream flowing in the pipeline 2 is diverted through a pipe 12 to a separator 14. The separator 14 is illustrated in more detail in Figure 3. The separator 14 consists of a cylindrical chamber 16 which has its central axis arranged substantially vertically. The inlet pipe 12 is connected to the chamber towards its top. The junction between the inlet pipe 12 and the chamber is such that the fluid flowing out of the pipe is directed tangentially around the cylindrical wall of the chamber 16. Disposed inside the chamber 16 are two conical mesh members 18, 20. Both members have their inner lower edges spaced from the chamber wall below the inlet 12 by spacer means 21 allowing a sufficient gap for solids to pass through. The members are mounted on pillars which do not obstruct flow through the separator. The upper conical member is open at both ends. The narrower end of the upper mesh member 18 is positioned above the inlet 12. The upper mesh member typically has a mesh size of 0.5 mm. and the lower mesh member a mesh size of 0.1 to 0.2 mm. The chamber 16 has two outlets 22, 24. The outlet 22 is disposed centrally in an upper cap 24 of the chamber. This outlet 22 takes off the gas components separated by the separator from the input fluid mixture. The outlet 24 is disposed centrally at the base of the chamber 16. The chamber 16 preferably has an inverted conical base which is tapered towards the outlet 24. The outlet 24 takes off the liquid components of the input fluid mixture.

The separator 14 operates by the combined effects of the swirling motion of the input fluid mixture and the conical mesh members to separate out the gas from the liquid components. The gas is partially knocked out as the fluid is swirled around the walls of the chamber. The larger of any remaining gas containing droplets of fluid tend to be caught on the meshes of the upper conical member 18. The gas escapes from such droplets on the mesh thereby allowing the liquid components to drop through to the outlet 24. The lower mesh member 20 removes finer bubbles from the mixture and has the effect of removing gas that is actually in solution. The provision of two conical members 18, 20 ensures a very thorough separation of the gas component. However, only one member may be provided. Since the input fluid mixture from an oil well tends to contain a proportion of sand and other solid matter, the mesh of the conical members is relatively coarse in order to allow the sand to pass through without blocking the mesh. The spacer means allows larger particles to pass through so that all solid matter is passed back to the pipeline thus ensuring that the separator can operate for long periods without becoming blocked by solid matter. If the separator was being used with an input free of solid matter, a finer mesh could be utilised for the conical members so that only one would be necessary.

A density meter 30 is positioned in the separator 14 between the mesh members and the outlet 24 to measure the density of the liquid components of the fluid. The output signal from the density meter 30 is fed to the processing circuit 50. The outlets 22 and 24 from the density meter 14 are directed back to the main pipeline downstream of the meters, 4, 6, 8 and 10. The pipeline is connected back into the main output from the oil well.

The density meters 10 and 30 are preferably nucleonic density meters. Such meters produce an output signal representing the average value of the density of a liquid passing through the meter over a period of time. The time period, usually referred to as the time constant of the meter, may be in the range from 1 to 5 minutes. As the time constant increases, so does the accuracy of the density meter. The time constant can be effectively varied by adjusting the time taken for liquid to flow through the separator 14. This time period may be modified by adjusting the design parameters of the chamber and conical mesh members.

The flow meter 40 illustrated in Figure 2 is essentially similar to that illustrated in Figure 1. This flow meter does not require the use of nucleonic density meters. In place of the density meter 10, an additional differential pressure meter 42 is provided. The outputs from the pressure meter 4, temperature meter 6, velocity meter 8 and differential pressure meter 42 are fed to the processing circuit which derives both the volume flow rate and the density of the combined flow. The density of the liquid components of the flow is measured by a capacitor 44 disposed in the separator 14 downstream of the mesh members. The output signal from the capacitor 44 is the voltage across it which varies depending on the conductivity of the liquid between the plates. This conductivity is, in turn, dependent on the relative proportion of water and oil in the liquid.

The processing circuit 50 also has an input 52 by means of which the known densities of the various separate fluid phases may be supplied to the processing circuit. The output 54 from the circuit 50 represents the current volume or mass flow rates of the phases.

The operation of the processing circuit, 50 to output the volume or mass flow rates of the three phases being produced by an oil well during a test period will now be described in more detail.

Let us suppose that phase 1 is gas, phase 2 is water and phase 3 is oil. The mass flow rate, volume flow rate and density of each phase will be designated by $m_i$, $v_i$ and $\rho_i$ respectively where $i = 1, 2$ or $3$ in dependence on the phase under consideration.

In the meter of Figure 1 let the signal produced by the pressure meter 4 be P, the signal produced by the temperature meter 6 be T, the signal produced by the velocity meter 8 be F, the signal produced by the density meter 10 be $D_1$ and the signal produced by the density meter 30 be $D_2$.

The volume rate of flow V of the mixture in terms of cubic meters per unit time at a reference pressure and temperature (V) is derived by the processing circuit from the following equation

$$V = \frac{PF}{T} f_z \ (P, F, T) \tag{1}$$

where $f_z$ is a super compressability factor which is dependent on the pressure and temperature as well as the velocity.

Since density meter 10 is located in the main pipeline 2 it measures the combined density of the three phases. Therefore,

$$D_1 = \frac{m_1 + m_2 + m_3}{V} \tag{2}$$

Since $m_i = v_i \, \rho_i$

$$D_1 = \frac{v_1 \rho_1}{V} + \frac{v_2 \rho_2}{V} + \frac{v_3 \rho_3}{V} \tag{3}$$

Since density meter 30 only measures the density of the combined liquid phases

$$D_2 = \frac{v_2 \rho_2}{v_2 + v_3} + \frac{v_3 \rho_3}{v_2 + v_3} \tag{4}$$

From the three equations (1), (3) and (4) and the known values of the density of each phase, the processing circuit can readily derive the values of $v_i$. From the values of $v_i$ and the values of the density the mass rate of flow for each phase can be derived. By integrating with respect to time the volume and mass rate of flow signals the accumulated mass and volume flows of each phase can be output for the total test period.

In the flow meter of Figure 2 the signal $D_1$ is derived as proportional to the output of the differential pressure meter divided by the square of the output of the velocity meter since
$\Delta P \propto 1/2 \rho F^2$

The output from the capacitor 44 produces a signal proportional to D2.

It will be appreciated that in both the embodiments of the invention various calibration constants are required. Such calibration constants may be derived by passing known mixtures or single phase flows through the flow meter during a calibration process. These calibration constants will then be stored in the processing circuit for future use. It will be appreciated further that the values of the densities may vary depending upon the stage of production of the oil well being monitored. Therefore, the processing circuit may need to be provided with new values for these densities from time to time or depending on the well under test.

The 3-phase meters described are preferably located close to the output from the oil well which is to be monitored so that the phases in the pipeline 2 have not had time to stratify. However, if circumstances dictate that the flow meter must be positioned further downstream, a choke would be required upstream of the meters illustrated in order to produce a substantially uniform mixture of the phases in the input to the meter. This is necessary to ensure that the sub-stream led off through pipe 12 contains the same relative proportions of the phases as the main stream.

It will be appreciated that the described flow meter can operate at normal production pressures from an oil well.

The flow meters shown in Figures 1 and 2 can readily be disposed sub-sea for monitoring the output of sub-sea oil wells. Preferably the signals from the various meters are fed along an electrical cable, a fibre optic link or a sonar or acoustic link to a processing circuit on the surface. If communications present a difficulty and only a low bandwidth link is available, a divided processing circuit may be provided. In this case, the main calculations will be carried out sub-sea and the results transmitted to a computer at the surface where final adjustments may be made to correct the output. This may be required where the density of the gas or oil being produced by the well being monitored varies over time or, where the same flow meter is being used to monitor the outputs of several different oil wells so as to adjust the mass flow output depends on the particular well under test at the time.

In a sub-sea application, it may be necessary to make the entire system self-contained. In this case a turbine generator may be fitted in the pipeline 2 upstream of the meter so as to generate the necessary power supplies for the meters and the processing circuit or that part of the processing circuit, if any, which is located sub-sea, as well as for the communications link. In this way the entire system may be incorporated in a sealed unit which may be submerged for a period of years without requirement for maintenance. Installation of such a self-contained unit may be carried out sub-sea by the use of a remote operated vehicle. It is only necessary to connect the pipeline 2 in a bypass manner to the main oil well outlet so that oil production can be diverted through the flow meter when test is required and bypass it at other times. The required flow control valves to switch the flow meter in or out can readily be controlled from the surface. Where the unit is fitted with a generator it is also preferably provided with a battery for storing energy and for maintaining the power supplies to the various units constant during fluctuations in the flow.

The described system can be mounted in a container with dimensions of the order of one meter by one meter by three meters as a typical example. This is considerably smaller than conventional centrifugal or gravity type separators.

## Claims

1. A continuous separator, (14) characterised in that it comprises a vertically disposed cylindrical chamber (16), having a fluid inlet (12) adjacent the top of the chamber (16), said fluid inlet being adapted to direct the incoming fluid tangentially around the cylindrical interior wall of the chamber (16), an open-ended conical mesh member (18,20) disposed with its base below said inlet, a gas outlet (22) disposed above said inlet (12) and above a top end of said mesh member (18,20) and an outlet (24) below said mesh member (18,20) for non-gaseous components of the input fluid.

2. A separator as claimed in claim 1, characterised in that two coaxial mesh members (18,20) are provided nested one above the other.

3. A separator in claim 2, characterised in that the mesh of the lower member (20) is finer than that of the upper member (18).

4. A flow meter (1,40), comprising a pipeline (2) for carrying a mixture of up to three distinct fluid components, a flow meter (4,6,8) associated with said pipeline (2) for producing a first signal representing the flow rate of the mixture, means (10,42,8) for producing a second signal representing the density of the mixture in the pipeline (2), means (12) for withdrawing a sample of the fluid from the pipeline and feeding it to a separator (14), means (30,44) for producing a third signal representing a parameter of the non-gaseous components of the mixture, and processing means (50) for receiving said first, second and third signals and processing them to produce outputs representing the flow rate of each fluid component passed through said pipeline (2), characterised in that the first signal represents the volume flow rate of the mixture, in that the withdrawing means (12) continuously withdraws a fraction of the fluid from the pipeline (2), in that the third signal represents the combined density of the non-gaseous components of the mixture, and in that the apparatus further comprises means (22,24) for returning at least the separated non-gaseous components of the mixture to the pipeline (2).

5. A flow meter as claimed in claim 4, characterised in that the volume flow meter (4,6,8) comprises a velocity meter (8), a pressure sensor (4) and a temperature sensor (6), the outputs of which are fed to the processing means (50) for producing said first signal.

6

6. A flow meter as claimed in claim 4 or 5, characterised in that either or both the means (10,30) for producing signals representing density comprise nucleonic density meters.

7. A flow meter as claimed in any one of the preceding claims, characterised in that the means for producing the third signal comprises a capacitative density meter (44).

8. A flow meter as claimed in any one of the preceding claims, characterised in that the means for producing the second signal comprises a differential pressure meter (42) and a velocity meter (8).

9. A flow meter as claimed in any one of the preceding claims, characterised in that the continuous separator (14) comprises a vertically disposed cylindrical chamber (16) having a fluid inlet (12) adjacent the top of the chamber (16), said fluid inlet being adapted to direct the incoming fluid tangentially around the cylindrical interior wall of the chamber, an open-ended conical mesh member (18,20) disposed with its base below said inlet, a gas outlet (22) disposed above said inlet (12) and above a top end of said mesh member (18,20), and an outlet (24) below said mesh member (18,20) for non-gaseous components of the input fluid.

10. A flow meter as claimed in claim 6, characterised in that the means (30,44) for producing the third signal representing demnsity is disposed in said chamber (16) below said mesh member (18,20).

11. A flow meter as claimed in any one of the preceding claims, characterised in that it further comprises means (52) for supplying the processing means (50) with data relating to the present density of each of the components to enable the meter to output inferred mass flow rates.

FIG. 1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-C- 534 904 (SIEMENS & HALSKE AG) * Claims 1-3 * | 1 | B 01 D 19/00 B 01 D 45/12 G 01 F 1/74 |
| A | US-A-3 071 913 (R. BLEVITZKY et al.) * Claim 1 * | 1 | |
| A | US-A-3 898 068 (A. MCNEIL) * Claims 1,10 * | 1 | |
| A,D | US-A-4 282 760 (W. PITTS et al.) * Claims 1,2 * | 4,6 | |
| A | GB-A-2 128 756 (MOORE BARRETT & REDWOOD LTD) * Claims 1-3; page 2, lines 30-32 * | 4,6 | |
| A,D | US-A-4 429 581 (E. FURMAGA) | | |
| A,D | US-A-4 272 982 (M. ARNOLD et al.) | | |
| A | GB-A-2 089 049 (ORION KIKAI K.K.) | | TECHNICAL FIELDS SEARCHED (Int. Cl.4) B 01 D G 01 F F 17 D |

The present search report has been drawn up for all claims

| Place of search | Date of completion of the search | Examiner |
|---|---|---|
| THE HAGUE | 18-04-1989 | VAN DEN BULCKE E. |